# EUROPEAN PATENT APPLICATION

(11) **EP 4 686 177 A1**
(43) Date of publication of application: **28.01.2026**
(21) Application number: 24777613.1
(22) Date of filing: 29.02.2024
(51) Int. Cl.: H04L 67/141

(54) **CONNECTION ESTABLISHMENT METHOD, COMMUNICATION DEVICE, AND STORAGE MEDIUM**

(30) Priority: 31.03.2023 CN 202310359944
(71) Applicant: ZTE Corporation, Shenzhen, Guangdong 518057 (CN)
(72) Inventor: YANG, Sanwei, Shenzhen, Guangdong 518057 (CN); NIU, Xiaobing, Shenzhen, Guangdong 518057 (CN)
(74) Representative: Savi, Massimiliano
(86) International application number: PCT/CN2024/079365
(87) International publication number: WO 2024/198823

(57) **Abstract**

A connection establishment method, a communication device, and a storage medium are disclosed. The connection establishment method includes: receiving, by the network call controller component, a connection establishment request sent by a request initiator, wherein the connection establishment request carries at least a head resource identifier and a tail resource identifier (S1000); sending, by the network call controller component, a connection request to the administrative context according to the connection establishment request (S2000); performing, by the administrative context, connection configuration according to the connection request to obtain connection resource information corresponding to the head resource identifier and the tail resource identifier (S3000); receiving, by the network call controller component, the connection resource information from the administrative context (S4000); sending, by the network call controller component, the connection resource information to the request initiator to complete the connection establishment (S5000).

## Description

### CROSS-REFERENCE TO RELATED APPLICATION

This application is filed on the basis of Chinese patent application No. 202310359944.7 filed March 31, 2023, and claims priority to the Chinese patent application, the entire contents of which are incorporated herein by reference.

### TECHNICAL FIELD

The embodiments of the present application relate to the field of communication technology, and more particularly, to a connection establishment method, a communication device, and a storage medium.

### BACKGROUND

In a single-domain scenario, a connection scheduling may be completed by using only one controller, whereas in a scenario of upper-layer and lower-layer interaction with multiple controllers involved, Context is used to complete resource division and sharing. However, in such a cross-layer management and control system, a cross-layer connection interaction process initiated by a client-layer controller is still not sufficiently clear and explicit, and the capability of connection establishment in the interaction scenario is relatively weak.

### SUMMARY

The embodiments of the present application provide a connection establishment method, a communication device, and a storage medium, which are intended to enhance the connection establishment capability in a multi-controller interaction scenario.

In accordance with a first aspect of the present application, an embodiment provides a connection establishment method, applied to a controller, the controller being configured with a client context and an administrative context, the client context and the administrative context are configured to share a network call controller component; the connection establishment method including: receiving, by the network call controller component, a connection establishment request sent by a request initiator, the connection establishment request carries at least a head resource identifier and a tail resource identifier; sending, by the network call controller component, a connection request to the administrative context according to the connection establishment request; performing, by the administrative context, connection configuration according to the connection request to obtain connection resource information corresponding to the head resource identifier and the tail resource identifier; receiving, by the network call controller component, the connection resource information from the administrative context; sending, by the network call controller component, the connection resource information to the request initiator to complete the connection establishment.

In accordance with a second aspect of the present application, an embodiment provides a connection establishment method, applied to a controller, the controller being configured with a client context and an administrative context, the client context and the administrative context being respectively configured with a network call controller component, wherein the network call controller component corresponding to the administrative context is different from the network call controller component corresponding to the client context; the connection establishment method including: receiving, by the network call controller component corresponding to the client context, a connection establishment request sent by a request initiator, wherein the connection establishment request carries at least a head resource identifier and a tail resource identifier; sending, by the network call controller component corresponding to the client context, a connection request to the network call controller component corresponding to the administrative context according to the connection establishment request; performing, by the network call controller component corresponding to the administrative context, connection configuration according to the connection request to obtain connection resource information corresponding to the head resource identifier and the tail resource identifier; receiving, by the network call controller component corresponding to the client context, the connection resource information from the network call controller component corresponding to the administrative context; sending, by the network call controller component corresponding to the client context, the connection resource information to the request initiator to complete the connection establishment.

In accordance with a third aspect of the present application, an embodiment further provides a communication device, including: at least one processor; at least one memory configured to store at least one program; the at least one program, when executed by the at least one processor, causes the at least one processor to perform the connection establishment method as described above.

In accordance with a fourth aspect of the present application, an embodiment further provides a computer-readable storage medium storing a program executable by a processor, the program, when executed by a processor, causes the processor to perform the connection establishment method as described above.

In accordance with a fifth aspect of the present application, an embodiment also provides a computer program product, including a computer program or computer instructions stored in a computer-readable storage medium, and the computer program or the computer instructions, when executed by a processor of a communication device, causes the processor of the communication device to perform the connection establishment method as described above.

According to the embodiments of the present application, a connection establishment method, a communication device, and a storage medium are provided. In a case where the controller receives, by a network call controller component in a client context thereof, a connection establishment request sent by a request initiator and carrying at least a head resource identifier and a tail resource identifier, the controller first sends, according to the connection establishment request, a connection request to an administrative context thereof, then performs, by the administrative context, connection configuration according to the connection request to obtain connection resource information corresponding to the head resource identifier and the tail resource identifier required by the request initiator, subsequently receives, by the network call controller component, the connection resource information from the administrative context, and then sends the connection resource information to the request initiator to complete the connection establishment. Therefore, a complete and explicit cross-layer connection interaction process between the controller and the request initiator is achieved, such that the capability of connection establishment in a multi-controller interaction scenario can be enhanced.

### BRIEF DESCRIPTION OF DRAWINGS

FIG. 1 is a schematic diagram of a component interaction process in a connection establishment procedure within a single controller;
FIG. 2 is a flowchart of a connection establishment method provided in an embodiment of the present application;
FIG. 3 is a flowchart of S2000 in FIG. 2 provided in an embodiment of the present application;
FIG. 4 is a schematic diagram of a connection request interaction process between a service-layer controller and a client-layer controller in a cross-layer SDN controller architecture provided in an embodiment of the present application;
FIG. 5 is a schematic diagram of a connection request interaction process between a service-layer controller and a client-layer controller in a cross-layer SDN controller architecture provided in another embodiment of the present application;
FIG. 6 is a flowchart of S2000 in FIG. 2 provided in another embodiment of the present application;
FIG. 7 is a schematic diagram of a connection request interaction process between a service-layer controller and a client-layer controller in a cross-layer SDN controller architecture provided in another embodiment of the present application;
FIG. 8 is a schematic diagram of a connection request interaction process between a service-layer controller and a client-layer controller in a cross-layer SDN controller architecture provided in another embodiment of the present application;
FIG. 9 is a flowchart of S4000 in FIG. 2 provided in an embodiment of the present application;
FIG. 10 is a flowchart of S5000 in FIG. 2 provided in an embodiment of the present application;
FIG. 11 is a flowchart of S5000 in FIG. 2 provided in another embodiment of the present application;
FIG. 12 is a flowchart of a connection establishment method provided in another embodiment of the present application;
FIG. 13 is a schematic diagram of a connection request interaction process in a peer SDN controller architecture provided in an embodiment of the present application;
FIG. 14 is a schematic diagram of a connection request interaction process in a peer SDN controller architecture provided in another embodiment of the present application;
FIG. 15 is a schematic diagram of a connection request interaction process in a peer SDN controller architecture provided in another embodiment of the present application;
FIG. 16 is a schematic diagram of a connection request interaction process in a peer SDN controller architecture provided in another embodiment of the present application;
FIG. 17 is a schematic diagram of a communication device provided in an embodiment of the present application.

### DETAILED DESCRIPTION

In order to make the objectives, technical solutions, and advantages of the present application clearer, the present application will be described in further detail below with reference to the accompanying drawings and embodiments. It should be understood that the embodiments described herein are merely intended to illustrate the present application and are not intended to limit the present application.

It should be noted that although functional module division is carried out in the schematic diagrams of the apparatus, and logical sequences are illustrated in the flowcharts, in some cases, the steps shown or described may be executed in an order different from the division of modules in the apparatus or the order in the flowcharts. The terms "first," "second," and the like in the specification, claims, and drawings are used for distinguishing similar objects, and are not necessarily used to describe a specific order or precedence.

In the embodiments of the present application, the words "further," "for example," or "optionally" are used to indicate examples, illustrations, or explanations, and should not be construed as being more preferred or more advantageous than other embodiments or design solutions. The use of the words "further," "for example," or "optionally" is intended to present relevant concepts in a specific manner.

For the purpose of more conveniently describing the operating principle of the embodiments of the present application, an introduction of the relevant technical scenario is given below.

Management Control Continuum (MCC) integrates essentially the same management functions and control functions together, so as to realize unified management control of transport resources, and provide comprehensive management and control services for upper-layer users. Software Defined Network (SDN) Controller, Element Management System (EMS), Network Management System (NMS), and Control Plane are all instances of a management-control system, where functional modules in the management-control system provide functional services through interfaces.

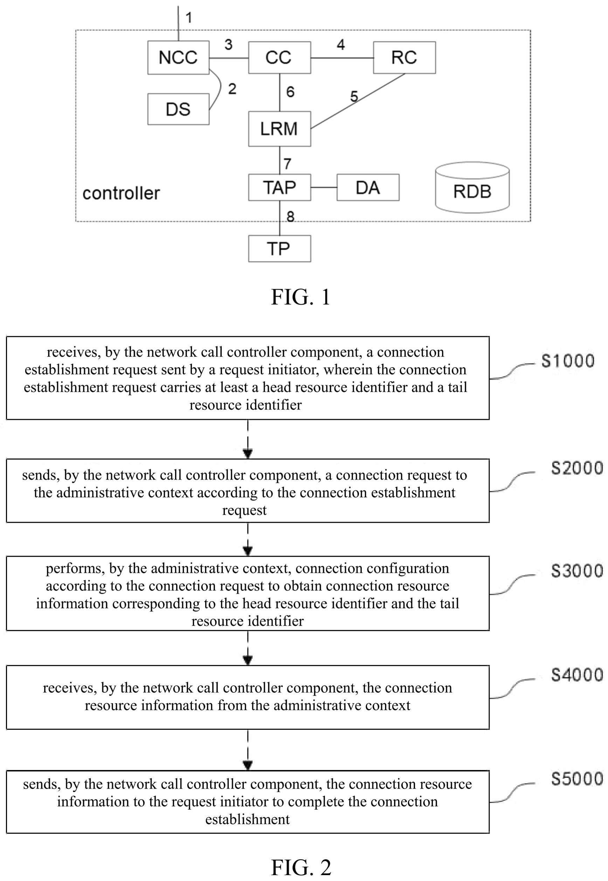

Connection scheduling is a basic function of the management-control system. Please refer to Figure 1, which illustrates the interaction sequence of connection establishment in the management-control system. The components of the management-control system include: Network Call Controller (NCC), Connection Controller (CC), Routing Controller (RC), Link Resources Manager (LRM), Termination and Adaptation Performer (TAP), and forwarding-plane network elements.

Link topology and resource usage information in the Controller are stored in the Resource Database (RDB).

Resources of the forwarding plane (e.g., timeslot, bandwidth, etc.) need to be converted into resources that can be managed by the management-control system. Resources of the forwarding plane are represented by Forwarding Point (FP) or Forwarding end Point (FwEP), while resources used by the management-control system are represented by Subnetwork Point (SNP). The relationship between FP/FwEP and SNP is managed by the TAP module, where one SNP can be bound to one FP/FwEP, or multiple SNPs can be bound to one FP/FwEP, thereby representing multiple SNPs sharing the same FP/FwEP resource. That is, a connection maintained by the management-control system, from the perspective of management-control, uses a sequence of SNPs (including head SNP and tail SNP); while from the perspective of the forwarding plane, it uses FP/FwEP resources in the forwarding-plane network elements.

A set of SNPs combined together is expressed as Subnetwork Point Pool (SNPP). The association between different SNPPs is expressed as an SNPP Link. An SNP Resource Identifier represents an SNP instance, and an SNPP Identifier represents an SNPP instance. A Boundary Resource Identifier (BRI) is used at the domain boundary to identify transport resources at the boundary and the interface between control components.

For a component interaction procedure in which the Controller directly controls transport resources, the flow is as follows:
Referring to Figure 1, in the Controller, when the NCC receives a connection establishment request (i.e., step 1 as shown in Figure 1, same below and not repeated), it converts the Boundary Resource Identifier (BRI) in the request (step 2) into two SNP Resource Identifiers inside the Controller via Directory Services (DS). The connection establishment request may also carry partial or complete routing information of the connection. The NCC sends the head SNP Resource Identifier and the tail SNP Resource Identifier to the CC (step 3). The CC requests the RC to query the connection route between the head SNP Resource Identifier and the tail SNP Resource Identifier (step 4). The RC, based on topology information and local connection state information provided by the LRM (step 5), computes a path that satisfies the CC's request. If the request of the CC carries routing information, the routing information can also be used in the RC's route computation. The RC returns the routing information to the CC. The CC requests the LRM (step 6) to select appropriate link connections from the links along the route. The LRM, through the TAP component, configures the usage state of forwarding resources to the forwarding plane (steps 7 and 8). After the forwarding plane updates the link resource usage state and establishes subnetwork cross-connections, the connection established by the Controller is successfully set up. Upon successful establishment, the NCC responds to the requester with a connection establishment success.

In the hierarchical architecture of the SDN Controller, an upper-layer Controller and a lower-layer Controller form a client layer and a service layer relationship. Between the client-layer Controller and the service-layer Controller, interactions are performed through a Server Context and a Client Context. Each Controller may create multiple Client Contexts, at least one Server Context, and one Administrative Context. Resources in each Context include SNPP and SNPP Link.

For resource management and control within an SDN Controller, resources of the Server Context may be resources of the forwarding plane directly controlled by the local Controller, or resources provided by the service-layer Controller. These resources are all mapped into a Local Resource Pool in the Administrative Context. The Administrative Context then allocates subsets of the Local Resource Pool to different Client Contexts. For each Client Context, resources are provided to the client-layer Controller through a virtual network.

From the Server Context to the Administrative Context, and from the Administrative Context to the Client Context, resource reconstruction, abstraction, mapping, and namespace conversion may be performed.

For resources provided by a service-layer Controller, a client-layer Controller does not directly control such resources. When these resources are needed, cross-layer interaction is required. In a single-domain scenario, one Controller may be sufficient to complete connection scheduling. However, in scenarios with multiple Controllers participating in upper-layer and lower-layer interactions, Contexts can be used to achieve resource partitioning and sharing. Nevertheless, in such cross-layer management-control systems, the cross-layer connection interaction process and interface relationship initiated by the client-layer Controller are still not clear and explicit, and the capability of connection establishment in interaction scenarios is relatively weak. Furthermore, similar cross-layer connection interaction issues also exist in connection scheduling processes between multiple peer Controllers.

Based on this, the present application provides a connection establishment method, a communication device, and a storage medium. An embodiment of the connection establishment method is applied to a controller, the controller being configured with a client context and an administrative context, the client context being configured with a network call controller component; the method including: receiving, by the network call controller component, a connection establishment request sent by a request initiator, the connection establishment request carrying at least a head resource identifier and a tail resource identifier; sending, by the network call controller component, a connection request to the administrative context according to the connection establishment request; performing, by the administrative context, connection configuration according to the connection request to obtain connection resource information corresponding to the head resource identifier and the tail resource identifier; receiving, by the network call controller component, the connection resource information from the administrative context; sending, by the network call controller component, the connection resource information to the request initiator to complete the connection establishment.

In this embodiment, in a case where the controller receives, through the network call controller component in its internal client context, a connection establishment request sent by a request initiator carrying at least a head resource identifier and a tail resource identifier, the controller first sends, according to the connection establishment request, a connection request to its internal administrative context, then performs, through the administrative context, connection configuration according to the connection request to obtain the connection resource information corresponding to the head resource identifier and the tail resource identifier required by the request initiator, next receives, by the network call controller component, the connection resource information from the administrative context, and then sends the connection resource information to the request initiator to complete the connection establishment. Therefore, the cross-layer connection interaction process between the controller and the request initiator is fully and explicitly realized, which can enhance the connection establishment capability in multi-controller interaction scenarios.

Hereinafter, embodiments of the present application are further described with reference to the drawings.

As shown in Figure 2, Figure 2 is a flowchart of the connection establishment method provided in one embodiment of the present application. The connection establishment method may, but is not limited to, be applied to a Controller, the Controller being configured with a Client Context and an Administrative Context, the Client Context being configured with a Network Call Controller component. The method may comprise, but is not limited to, steps of S1000 to S5000.

At S1000, the Network Call Controller component receives a connection establishment request sent by a request initiator, wherein the connection establishment request carries at least a head resource identifier and a tail resource identifier.

At S2000, the Network Call Controller component sends a connection request to the Administrative Context according to the connection establishment request.

At S3000, the Administrative Context performs connection configuration according to the connection request to obtain connection resource information corresponding to the head resource identifier and the tail resource identifier.

At S4000, the connection resource information is received from the Administrative Context by the Network Call Controller component.

At S5000, the connection resource information is sent to the request initiator by the Network Call Controller component to complete the connection establishment.

In this step, when the Controller, through the Network Call Controller component in its internal Client Context, receives a connection establishment request sent by a request initiator carrying at least a head resource identifier and a tail resource identifier, it first sends a connection request to its internal Administrative Context according to the connection establishment request. Then, the Administrative Context performs connection configuration according to the connection request to obtain the connection resource information required by the request initiator, corresponding to the head resource identifier and the tail resource identifier. Subsequently, the connection resource information is received from the Administrative Context by the Network Call Controller component, and the connection resource information is sent to the request initiator to complete the connection establishment. Therefore, the cross-layer connection interaction process between the Controller and the request initiator is completely and explicitly implemented, thereby enhancing the connection establishment capability in multi-Controller interaction scenarios.

In one embodiment, the request initiator may be of various device types, which are not limited herein. For example, the request initiator may, but is not limited to, be another Controller that is an upper-layer or lower-layer Controller with respect to the present Controller, or may, but is not limited to, be another Controller that is a peer Controller of the present Controller. Subsequent descriptions will be provided respectively for these two different application scenarios, and details are omitted here.

In one embodiment, the Network Call Controller component is further configured in the Administrative Context, and the Administrative Context and the Client Context share the Network Call Controller component. That is, within a Controller, the components contained in a Context represent the logical relationship between the Context and the component, rather than actual deployment conditions. In implementation, each component may have only one instance, and the component thus possesses the capability of cross-Context interaction.

In one embodiment, the Administrative Context is configured with a Network Call Controller component that is different from the Network Call Controller component of the Client Context. The Controller performs information interaction between the Client Context and the Administrative Context through the Network Call Controller component of the Client Context and the Network Call Controller component of the Administrative Context.

In one embodiment, the head resource identifier comprises a head Boundary Resource Identifier, and the tail resource identifier comprises a tail Boundary Resource Identifier. That is, the Boundary Resource Identifier may be converted into two SNP Resource Identifiers inside the Controller, namely the head SNP Resource Identifier and the tail SNP Resource Identifier. In addition, the connection establishment request may also carry partial or complete routing information of the connection, which is to be configured depending on the actual application scenario, and is not limited herein.

In one embodiment, the Client Context is further configured with a Directory Service component, and the Directory Service component is used to convert the resource identifier. That is, the Client Context has not only the logical function of the Network Call Controller component but also the logical function of the Directory Service component, so that the Boundary Resource Identifier can be converted into the head SNP Resource Identifier and the tail SNP Resource Identifier inside the Controller.

In one embodiment, similar to the configuration of the Network Call Controller component, the Directory Service component is further configured in the Administrative Context, and the Administrative Context and the Client Context share the Directory Service component. Alternatively, the Administrative Context is configured with a Directory Service component that is different from the Directory Service component of the Client Context.

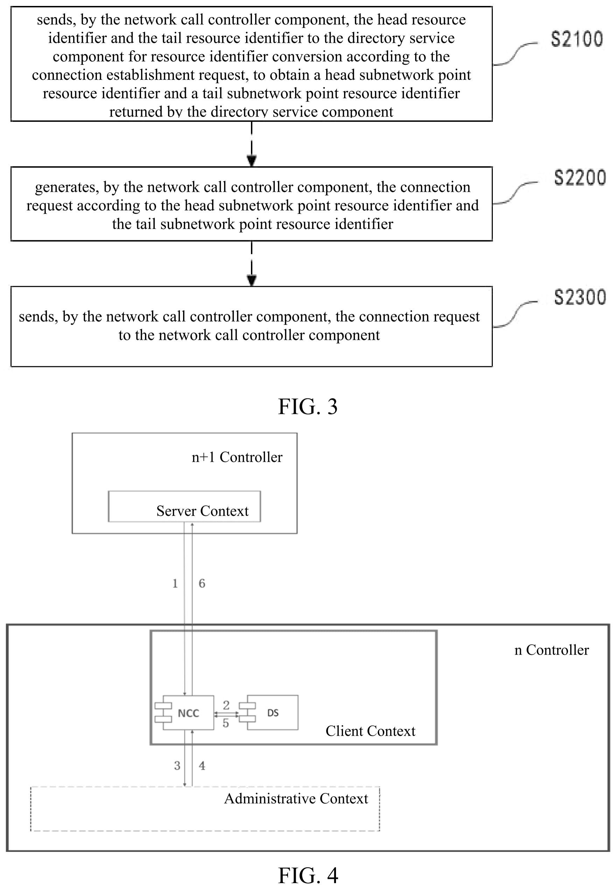

As shown in Figure 3, in one embodiment of the present application, step of S2000 is further described. Step of S2000 may comprise, but is not limited to, steps S2100 to S2300.

At S2100, the head resource identifier and the tail resource identifier are sent to the Directory Service component by the Network Call Controller component according to the connection establishment request, for performing resource identifier conversion, and a head Subnetwork Point Resource Identifier and a tail Subnetwork Point Resource Identifier returned by the Directory Service component are obtained.

At S2200, the Network Call Controller component generates a connection request according to the head Subnetwork Point Resource Identifier and the tail Subnetwork Point Resource Identifier.

At S2300, the Network Call Controller component sends the connection request to the Administrative Context.

In this step, the head resource identifier and the tail resource identifier are sent to the Directory Service component by the Network Call Controller component according to the connection establishment request, so that the Directory Service component performs resource identifier conversion to obtain the head Subnetwork Point Resource Identifier and the tail Subnetwork Point Resource Identifier, and returns them to the Network Call Controller component. On this basis, the Network Call Controller component accurately and reliably generates a connection request according to the head Subnetwork Point Resource Identifier and the tail Subnetwork Point Resource Identifier, thereby achieving the purpose of sending the connection request to the Administrative Context by the Network Call Controller component.

The following provides examples to clearly illustrate the operating principle of the above-mentioned related embodiments.

### Example 1:

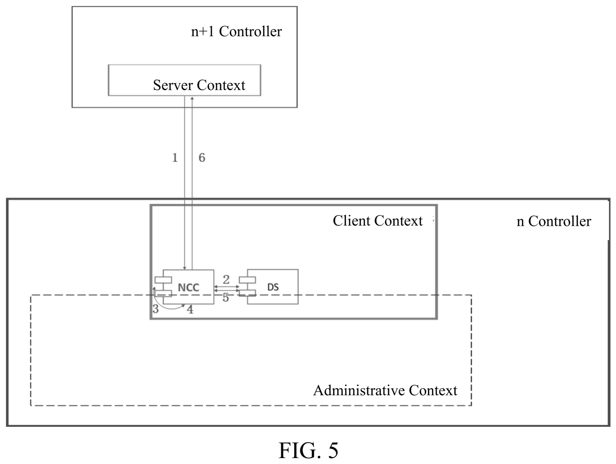

Referring to FIG. 4 and FIG. 5, FIG. 4 is a schematic diagram of the connection request interaction process between a service layer Controller and a client layer Controller in a cross-layer SDN Controller architecture provided by an embodiment of the present application, and FIG. 5 is a schematic diagram of the connection request interaction process between a service layer Controller and a client layer Controller in a cross-layer SDN Controller architecture provided by another embodiment of the present application. In FIG. 4 and FIG. 5, the ClientContext includes the NCC component and the DS component, and the multi-domain service layer connection request interaction is triggered by the client layer Controller.

As shown in FIG. 4, the n+1 Controller and the n Controller are upper and lower layer Controllers, belonging to a Client/Server relationship, and communicate with each other through ClientContext-ServerContext. The ClientContext is configured with the necessary parameters, protocols, resources, and the like for communication by the client layer Controller (i.e., n+1 Controller), including the ClientContext identifier, communication encryption protocol, virtual network resources allocated to the client, and corresponding namespace. The ServerContext is configured with the necessary parameters, protocols, resources, and the like for communication by the service layer Controller (i.e., n Controller), including the ServerContext identifier, communication encryption protocol, virtual network resources provided by the service layer, and corresponding namespace.

Multiple sets of ClientContext-ServerContext can be configured between the client layer Controller and the service layer Controller to meet different communication requirements, negotiating and determining mutually recognized namespaces and resource identifier formats within these namespaces. Transport resources within the scope of the n Controller are converted from the ServerContext and local resources. The n Controller allocates a subset of the transport resources to different ClientContexts after conversion. The conversion is optional based on trust relationships, and functions include resource reconstruction, abstraction, mapping, and namespace conversion. The AdministrativeContext for this Controller may also be referred to as the LocalContext, and "Context" refers to any of the ClientContext, ServerContext, or AdministrativeContext. The resources of the aforementioned Controllers and Contexts refer to SNP, SNPP, or SNPP Link, and forwarding plane resources refer to FP or FwEP.

It should be noted that the components shown in FIG. 4 and FIG. 5 represent logical functions and do not indicate actual deployment. Within a Controller, components included in a Context represent the logical function relationship between the Context and the components, for facilitating the description of interaction logic in the process. For example, in FIG. 4, the ClientContext is configured with NCC, and the AdministrativeContext is also configured with NCC, with interactions occurring between the two NCCs. Alternatively, in implementation, there may only be a single instance of each component; for example, if NCC is merged into a single instance, the component possesses cross-Context interaction capability, and the interaction process between NCCs is completed internally within the NCC, as shown in FIG. 5, i.e., the ClientContext and AdministrativeContext share the NCC in this case.

The steps of the connection request interaction process shown in FIG. 4 and FIG. 5 are as follows:
When the NCC of the n Controller receives a connection establishment request initiated by the n+1 Controller (i.e., step 1 in FIG. 4, the same applies hereinafter), the request carries the ServerContext resource identifier of the n+1 Controller. The ServerContext resource identifier at least includes a head boundary resource identifier (BRI) and a tail boundary resource identifier (BRI).

Then, the NCC of the ClientContext in the n Controller converts the resource identifier in the connection request to the SNP resource identifier of the AdministrativeContext via the DS component (step 2).

Then, the NCC of the ClientContext carries the SNP resource identifier of the AdministrativeContext to perform a connection request to the AdministrativeContext (step 3).

After the AdministrativeContext completes the connection configuration (the AdministrativeContext may perform recursive connection computation and then request configuration), the configuration result of the connection request is returned to the NCC of the ClientContext, and the result contains the connection resource information of the SNP resource identifier path of the AdministrativeContext (step 4).

In one embodiment, as shown in FIG. 5, the NCC of the ClientContext and the NCC of the AdministrativeContext are merged into a single instance. The NCC component then possesses cross-Context interaction capability, and the interaction process between NCCs, i.e., steps 3 and 4, is completed internally within the NCC. Other implementation steps in the scenario shown in FIG. 5 are similar to those in FIG. 4 and are not repeated here.

Then, the NCC converts the resource identifiers in the returned connection resource information to ClientContext resource identifiers via the DS component (step 5), and returns it to the n+1 Controller (step 6), thereby completing the entire connection request process.

Particularly, n Controller may omit S2400 and S2900 according to the connection request information or local control policy.

In an embodiment, the client context is further configured with a connection controller component, a routing controller component, and a link resources manager component, wherein the connection controller component is used to request the routing controller component to query a connection route and to request the link resources manager component to select a connection link, the routing controller component is used to calculate the connection route, and the link resources manager component is used to select the connection link in the links traversed by the route.

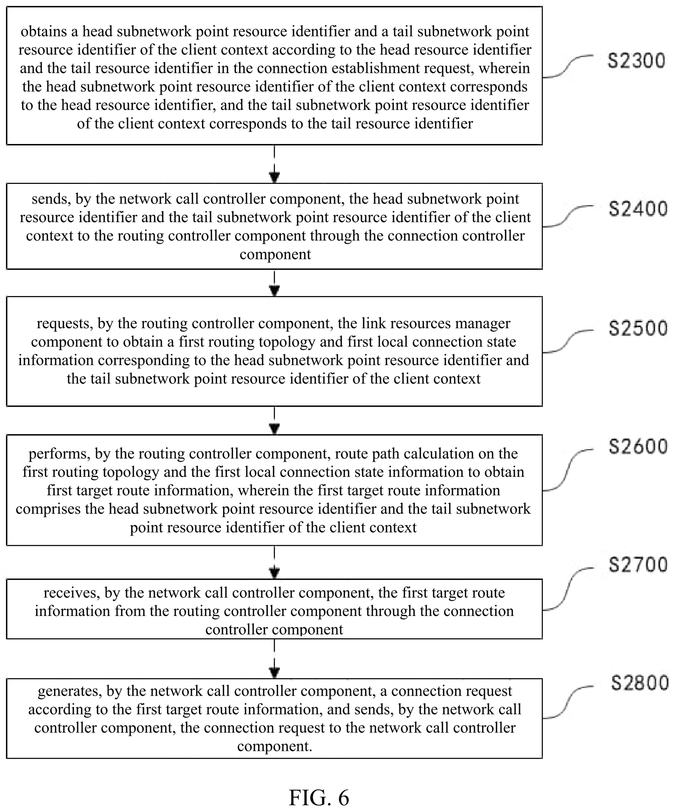

As shown in FIG. 6, in one embodiment of the present disclosure, S2000 is further illustrated, and S2000 includes, but is not limited to, steps of S2400 to S2900.

At S2400, a head subnetwork point resource identifier and a tail subnetwork point resource identifier of the client context are obtained according to the head resource identifier and the tail resource identifier in the connection establishment request, wherein the head subnetwork point resource identifier of the client context corresponds to the head resource identifier, and the tail subnetwork point resource identifier of the client context corresponds to the tail resource identifier.

At S2500, the head subnetwork point resource identifier and the tail subnetwork point resource identifier of the client context are sent to the routing controller component through the connection controller component by the network call controller component.

At S2600, a first routing topology and first local connection state information corresponding to the head subnetwork point resource identifier and the tail subnetwork point resource identifier of the client context are requested from the link resources manager component through the routing controller component.

At S2700, a routing path is calculated on the first routing topology and the first local connection state information through the routing controller component to obtain first target route information, wherein the first target route information includes the head subnetwork point resource identifier and the tail subnetwork point resource identifier of the client context.

At S2800, the first target route information is received from the routing controller component through the connection controller component by the network call controller component.

At S2900, a connection request is generated according to the first target route information by the network call controller component, and the connection request is sent to the administrative context by the network call controller component.

In this step, since the head subnetwork point resource identifier and the tail subnetwork point resource identifier of the client context are obtained according to the head resource identifier and the tail resource identifier in the connection establishment request, on this basis, the head subnetwork point resource identifier and the tail subnetwork point resource identifier of the client context can further be sent to the routing controller component through the connection controller component by the network call controller component, so that the routing controller component can request the first routing topology and the first local connection state information corresponding to the head subnetwork point resource identifier and the tail subnetwork point resource identifier of the client context from the link resources manager component, and the first target route information can be obtained by calculating on the first routing topology and the first local connection state information. Accordingly, the network call controller component can receive the first target route information and generate the connection request according to the first target route information and send the connection request to the administrative context. It can be seen that, compared with the previous embodiment, a connection request can be generated not only according to the head subnetwork point resource identifier and the tail subnetwork point resource identifier by the network call controller component, but also according to the first target route information in this embodiment; in any case, the connection request can be reliably sent to the administrative context.

In one embodiment of the present application, step of S2000 is further illustrated. In a case where the client context is further configured with a directory service component, step of S2000 comprises, but is not limited to, steps S21000 to S28000.

At S21000, a head subnetwork point resource identifier and a tail subnetwork point resource identifier of the client context are obtained according to the head resource identifier and the tail resource identifier in the connection establishment request, wherein the head subnetwork point resource identifier of the client context corresponds to the head resource identifier, and the tail subnetwork point resource identifier of the client context corresponds to the tail resource identifier.

At S22000, the head subnetwork point resource identifier and the tail subnetwork point resource identifier of the client context are sent to the routing controller component through the connection controller component by the network call controller component.

At S23000, a request is made, through the routing controller component, to the link resources manager component to obtain a second routing topology and second local connection state information corresponding to the head subnetwork point resource identifier and the tail subnetwork point resource identifier of the client context.

At S24000, route path calculation is performed, by the routing controller component, on the second routing topology and the second local connection state information to obtain second target route information, wherein the second target route information comprises the head subnetwork point resource identifier and the tail subnetwork point resource identifier of the client context.

At S25000, the second target route information is received, by the network call controller component, from the routing controller component through the connection controller component.

At S26000, the second target route information is sent, by the network call controller component, to the directory service component for resource identifier conversion with respect to the head subnetwork point resource identifier and the tail subnetwork point resource identifier of the client context, so as to obtain third target route information returned by the directory service component, the third target route information comprising a head subnetwork point resource identifier and a tail subnetwork point resource identifier of the administrative context.

At S27000, a connection request is generated, by the network call controller component, according to the third target route information.

At S28000, the connection request is sent, by the network call controller component, to the administrative context.

In this step, since the head subnetwork point resource identifier and the tail subnetwork point resource identifier of the client context are obtained according to the head resource identifier and the tail resource identifier in the connection establishment request, based on this, the head subnetwork point resource identifier and the tail subnetwork point resource identifier of the client context can further be sent to the routing controller component through the connection controller component by the network call controller component. Accordingly, the routing controller component requests the link resources manager component to obtain a second routing topology and second local connection state information corresponding to the head subnetwork point resource identifier and the tail subnetwork point resource identifier of the client context, and route path calculation is performed on the second routing topology and the second local connection state information to obtain second target route information. The network call controller component receives the second target route information and sends it to the directory service component for resource identifier conversion with respect to the head subnetwork point resource identifier and the tail subnetwork point resource identifier of the client context, so as to obtain third target route information returned by the directory service component, which comprises a head subnetwork point resource identifier and a tail subnetwork point resource identifier of the administrative context. Finally, a connection request is generated, by the network call controller component, according to the third target route information, and the connection request is sent to the administrative context. Compared with the foregoing embodiments, it can be seen that not only can a connection request be generated by the network call controller component according to the head subnetwork point resource identifier and the tail subnetwork point resource identifier, or according to the first target route information, but also according to the third target route information, and in any case, a connection request can be reliably sent to the administrative context.

The following provides an example to clearly illustrate the operating principle of the above-related embodiments.

### Example 2:

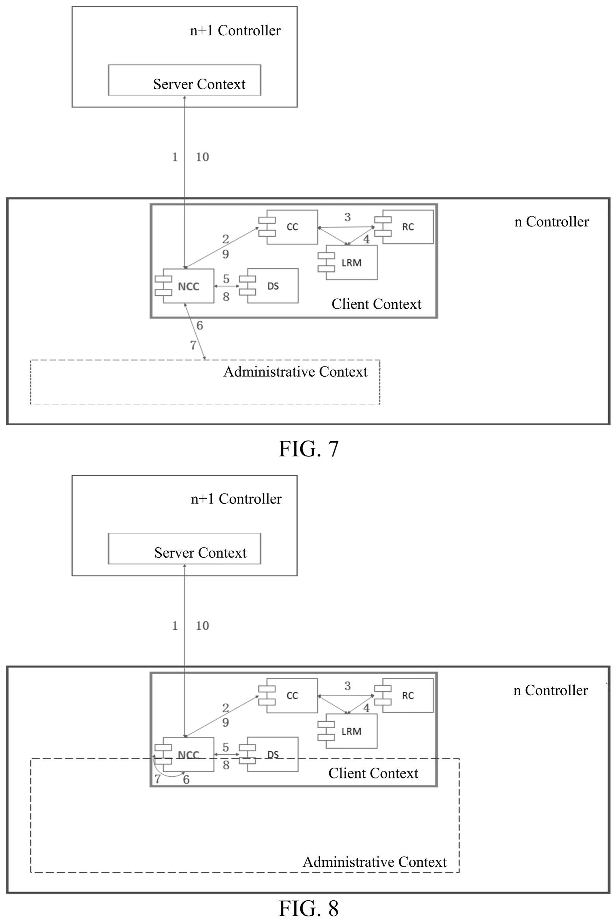

Referring to FIG. 7 and FIG. 8, FIG. 7 is a schematic diagram of the connection request interaction process between the service layer controller and the client layer controller in a cross-layer SDN Controller architecture provided in another embodiment of the present application. FIG. 8 is a schematic diagram of the connection request interaction process between the service layer controller and the client layer controller in a cross-layer SDN Controller architecture provided in another embodiment of the present application. In FIG. 7 and FIG. 8, the ClientContext comprises an NCC component, a DS component, a CC component, an RC component, and an LRM component, and interaction of multi-domain service layer connection requests is triggered by the client layer controller.

It should be noted that the components shown in FIG. 7 and FIG. 8 represent logical functions and do not represent actual deployment. Within a controller, the components included in the context indicate the logical relationship between the context and the components for the convenience of describing interaction logic in the process. For example, in FIG. 7, the ClientContext is configured with NCC, and the AdministrativeContext is also configured with NCC. Interaction occurs between the two NCCs for connection. Alternatively, in actual implementation, each component may have only one instance. For example, if NCC is implemented as a single instance, the component has cross-context interaction capability, and the interaction process between NCCs is completed within the NCC, as shown in FIG. 8. In this case, the ClientContext and AdministrativeContext share the NCC.

The steps of the connection request interaction process shown in FIG. 7 and FIG. 8 are as follows:
When the NCC of the n Controller receives a connection establishment request initiated by the n+1 Controller (at Step 1), the request carries a ServerContext resource identifier of the n+1 Controller. The ServerContext resource identifier comprises at least a head and tail resource identifier BRI.

Then, the NCC of the ClientContext in the n Controller sends a connection request carrying the SNP resource identifier of the ClientContext to the CC (at Step 2). The CC requests the RC to query a connection route between the head and tail SNP resource identifiers (at Step 3). The RC calculates a path result satisfying the CC request based on the topology information and local connection state information provided by the LRM (at Step 4). The CC then forwards the connection request with its path calculation result to the NCC.

The NCC then converts the resource identifiers in the connection establishment request to SNP resource identifiers of the AdministrativeContext through the DS component (at Step 5), and the NCC sends the connection request to the AdministrativeContext (at Step 6).

After the AdministrativeContext completes connection configuration (the AdministrativeContext may recursively perform connection calculation and then request configuration), the configuration result of the connection request is returned to the NCC of the ClientContext, wherein the result comprises connection resource information including the SNP resource identifiers of the AdministrativeContext path (at Step 7).

In one embodiment, as shown in FIG. 8, the NCC of the ClientContext and the NCC of the AdministrativeContext are merged into one instance. The NCC component has cross-context interaction capability, and the interaction process between NCCs, i.e., step of S7, is completed within the NCC. Other steps in the scenario shown in FIG. 8 are similar to those in FIG. 7, which are not repeated herein.

The NCC then converts the resource identifiers in the returned connection resource information into ClientContext resource identifiers through the DS component (at Step 8), and sends them to the CC (at Step 9). After the CC confirms the connection information, it is returned to the n+1 Controller (at Step 10), thereby completing the entire connection request process.

In particular, the n Controller may omit step 5 and step 8 according to the connection request information or local control policy.

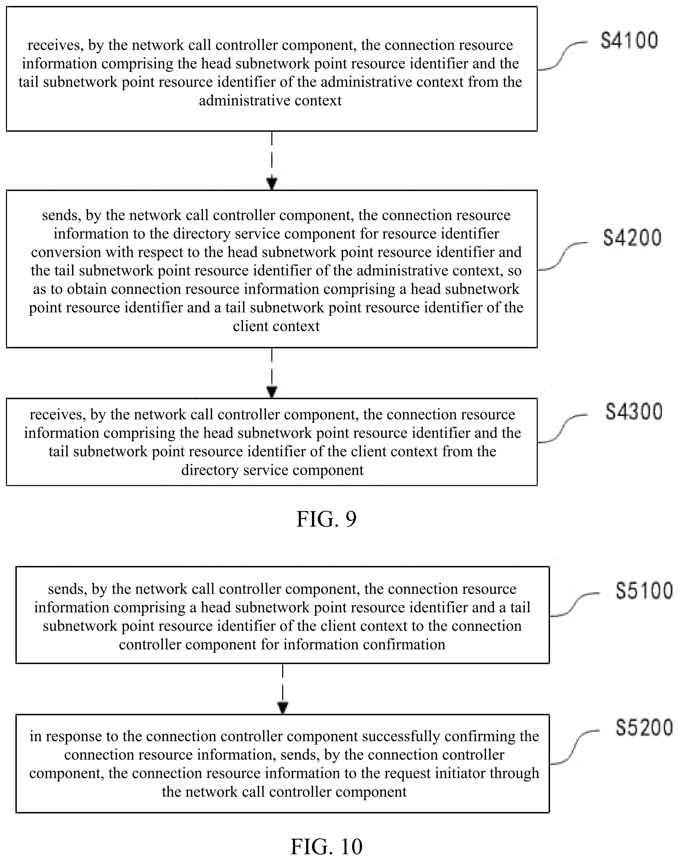

As shown in FIG. 9, in one embodiment of the present application, when the client context is further configured with a directory service component, and the connection resource information comprises a head subnetwork point resource identifier and a tail subnetwork point resource identifier of the administrative context, step of S4000 is further described. Step of S4000 includes, but is not limited to, steps S4100 to S4300.

At S4100, the connection resource information comprising a head subnetwork point resource identifier and a tail subnetwork point resource identifier of the administrative context is received by the network call controller component from the administrative context.

At S4200, the connection resource information is sent by the network call controller component to the directory service component for resource identifier conversion with respect to the head subnetwork point resource identifier and the tail subnetwork point resource identifier of the administrative context, so as to obtain connection resource information comprising a head subnetwork point resource identifier and a tail subnetwork point resource identifier of the client context.

At S4300, the connection resource information comprising a head subnetwork point resource identifier and a tail subnetwork point resource identifier of the client context is received by the network call controller component from the directory service component.

In this step, when the client context is further configured with a directory service component, and the connection resource information comprises a head subnetwork point resource identifier and a tail subnetwork point resource identifier of the administrative context, the connection resource information comprising a head subnetwork point resource identifier and a tail subnetwork point resource identifier of the administrative context is received by the network call controller component from the administrative context. The connection resource information is then sent by the network call controller component to the directory service component for resource identifier conversion, thereby obtaining connection resource information comprising a head subnetwork point resource identifier and a tail subnetwork point resource identifier of the client context. Finally, the connection resource information after resource identifier conversion is received by the network call controller component from the directory service component. It can be seen that the resource identifier conversion via the directory service component facilitates obtaining the desired connection resource information from the administrative context.

As shown in FIG. 10, in one embodiment of the present application, when the client context is further configured with a connection controller component, step of S5000 is further described. Step of S5000 includes, but is not limited to, steps S5100 to S5200.

At S5100, the connection resource information comprising a head subnetwork point resource identifier and a tail subnetwork point resource identifier of the client context is sent by the network call controller component to the connection controller component for information confirmation.

At S5200, in response to the connection controller component successfully confirming the connection resource information, the connection resource information is sent by the connection controller component through the network call controller component to the request initiator.

In this step, the connection resource information comprising a head subnetwork point resource identifier and a tail subnetwork point resource identifier of the client context is sent by the network call controller component to the connection controller component for information confirmation. The purpose is to confirm whether the connection resource information is successfully validated by the connection controller component. In response to the successful confirmation, the connection resource information is sent by the connection controller component through the network call controller component to the request initiator. It can be seen that the information confirmation process via the connection controller component effectively ensures that the connection resource information under a successful confirmation status can be returned and sent.

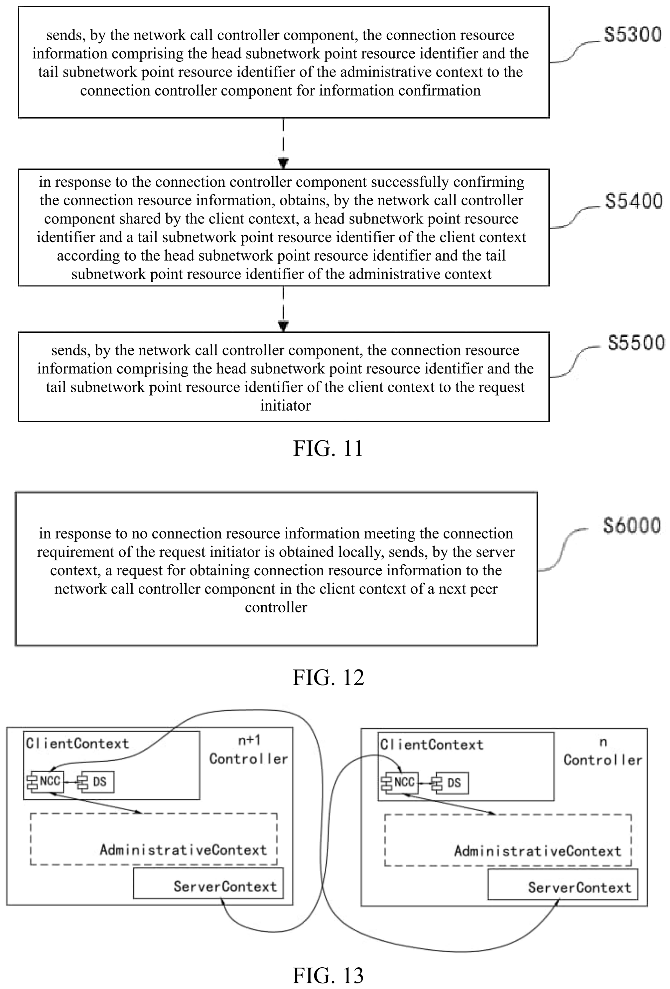

As shown in FIG. 11, in one embodiment of the present application, when the client context is further configured with a connection controller component, step of S5000 is further described. Step of S5000 includes, but is not limited to, steps S5300 to S5500.

At S5300, the connection resource information comprising a head subnetwork point resource identifier and a tail subnetwork point resource identifier of the administrative context is sent by the network call controller component to the connection controller component for information confirmation.

At S5400, in response to the connection controller component successfully confirming the connection resource information, a head subnetwork point resource identifier and a tail subnetwork point resource identifier of the client context are obtained by the network call controller component according to the head subnetwork point resource identifier and the tail subnetwork point resource identifier of the administrative context.

At S5500, the connection resource information comprising a head subnetwork point resource identifier and a tail subnetwork point resource identifier of the client context is sent by the network call controller component to the request initiator.

In this step, the connection resource information comprising a head subnetwork point resource identifier and a tail subnetwork point resource identifier of the client context is sent by the network call controller component to the connection controller component for information confirmation. The purpose is to confirm whether the connection resource information is successfully validated by the connection controller component. In response to the successful confirmation, a head subnetwork point resource identifier and a tail subnetwork point resource identifier of the client context are obtained by the network call controller component according to the head subnetwork point resource identifier and the tail subnetwork point resource identifier of the administrative context. The connection resource information is then sent by the network call controller component to the request initiator. It can be seen that the information confirmation process via the connection controller component effectively ensures that the connection resource information comprising a head subnetwork point resource identifier and a tail subnetwork point resource identifier of the client context can be generated and sent by the network call controller component.

In one embodiment, the controller and the request initiator are peer controllers. That is, in this case, no fixed hierarchical relationship exists between the controller and the request initiator, i.e., they do not belong to a fixed client layer and service layer relationship, but rather belong to a mutually peer relationship. The subsequent examples will describe the connection interaction process under this scenario in detail, which is not elaborated herein.

As shown in FIG. 12, in one embodiment of the present application, when the controller is further configured with a service context, the connection establishment method further includes, but is not limited to, step of S6000.

At S6000, when connection resource information satisfying the connection requirements of the request initiator is not obtained locally, a request for obtaining connection resource information is sent by the service context to the network call controller component in the client context of the next peer controller.

In this step, when connection resource information satisfying the connection requirements of the request initiator is not obtained locally, it indicates that the network call controller component in the client context of the local controller cannot satisfy the request initiator's request for obtaining connection resource information. At this time, a request for obtaining connection resource information is sent by the service context to the network call controller component in the client context of the next peer controller, so that the next peer controller can satisfy the request initiator's request and thereby obtain connection resource information satisfying the connection requirements of the request initiator.

The following examples are provided to more clearly illustrate the operating principle of the above embodiments.

### Example 3:

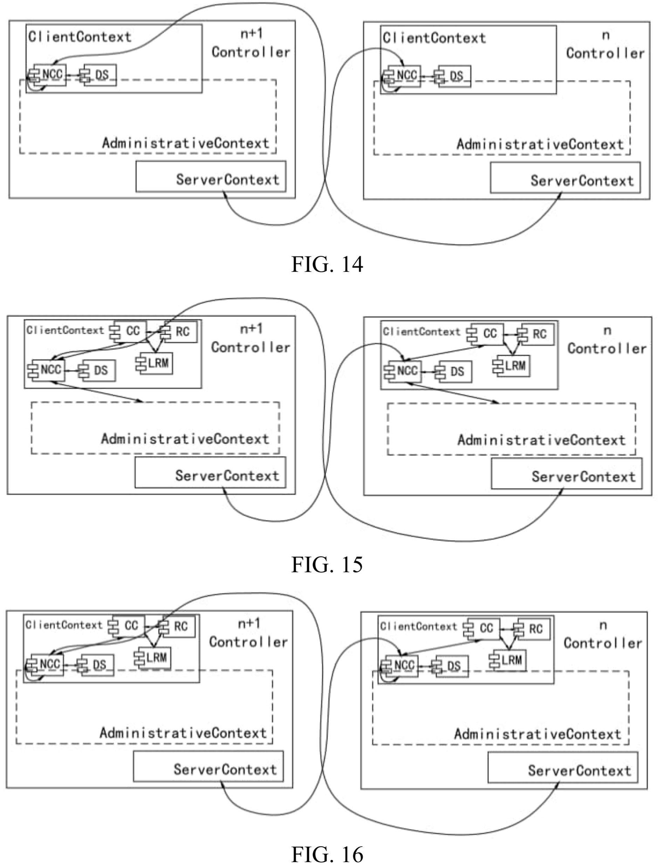

Referring to FIGS. 13 and 14, FIG. 13 is a schematic diagram of a connection request interaction process in a peer-to-peer (Peer-Peer, P2P) SDN Controller architecture provided in one embodiment of the present application, and FIG. 14 is a schematic diagram of a connection request interaction process in a Peer-Peer SDN Controller architecture provided in another embodiment of the present application. In FIGS. 13 and 14, the ClientContext includes an NCC component and a DS component.

In FIGS. 13 and 14, the n+1 Controller and the n Controller are in a peer-to-peer relationship. The n Controller communicates with the n+1 Controller's ServerContext through the ClientContext, i.e., the n+1 Controller can initiate connection establishment to the n Controller through the ServerContext; the n+1 Controller communicates with the n Controller's ServerContext through the ClientContext, i.e., the n Controller can initiate connection establishment to the n+1 Controller through the ServerContext.

The steps of the connection request interaction process shown in FIGS. 13 and 14 are as follows:
When the n Controller initiates connection establishment to the n+1 Controller, the n Controller acts as a client layer controller, and the n+1 Controller acts as a service layer controller. This connection establishment process is the same as the connection establishment process in Example 1. At this time, the n Controller in this example corresponds to the n+1 Controller in Example 1, and the n+1 Controller in this example corresponds to the n Controller in Example 1. Since the connection establishment process in Example 1 has been described in detail, it is not repeated herein.

When the n+1 Controller initiates connection establishment to the n Controller, the n+1 Controller acts as a client layer controller, and the n Controller acts as a service layer controller. This connection establishment process is the same as the connection establishment process in Example 1. At this time, the n Controller in this example corresponds to the n Controller in Example 1, and the n+1 Controller in this example corresponds to the n+1 Controller in Example 1. Since the connection establishment process in Example 1 has been described in detail, it is not repeated herein.

It should be noted that when the n Controller initiates connection establishment to the n+1 Controller, during connection computation, the resources corresponding to the ServerContext of the ClientContext mapping to the n Controller should be excluded to avoid nested resource loops, and vice versa.

### Example 4:

Referring to FIGS. 15 and 16, FIG. 15 is a schematic diagram of a connection request interaction process in a Peer-Peer SDN Controller architecture provided in another embodiment of the present application, and FIG. 16 is a schematic diagram of a connection request interaction process in a Peer-Peer SDN Controller architecture provided in yet another embodiment of the present application. In FIGS. 15 and 16, the ClientContext includes an NCC component, a DS component, a CC component, an RC component, and an LRM component.

In FIGS. 15 and 16, the n+1 Controller and the n Controller are in a peer-to-peer relationship. The n Controller communicates with the n+1 Controller's ServerContext through the ClientContext, i.e., the n+1 Controller can initiate connection establishment to the n Controller through the ServerContext; the n+1 Controller communicates with the n Controller's ServerContext through the ClientContext, i.e., the n Controller can initiate connection establishment to the n+1 Controller through the ServerContext.

The steps of the connection request interaction process shown in FIGS. 15 and 16 are as follows:
When the n Controller initiates connection establishment to the n+1 Controller, the n Controller acts as a client layer controller, and the n+1 Controller acts as a service layer controller. This connection establishment process is the same as the connection establishment process in Example 2. At this time, the n Controller in this example corresponds to the n+1 Controller in Example 2, and the n+1 Controller in this example corresponds to the n Controller in Example 2. Since the connection establishment process in Example 2 has been described in detail, it is not repeated herein.

When the n+1 Controller initiates connection establishment to the n Controller, the n+1 Controller acts as a client layer controller, and the n Controller acts as a service layer controller. This connection establishment process is the same as the connection establishment process in Example 2. At this time, the n Controller in this example corresponds to the n Controller in Example 2, and the n+1 Controller in this example corresponds to the n+1 Controller in Example 2. Since the connection establishment process in Example 2 has been described in detail, it is not repeated herein.

It should be noted that when the n Controller initiates connection establishment to the n+1 Controller, during connection computation, the resources corresponding to the ServerContext of the ClientContext mapping to the n Controller should be excluded to avoid nested resource loops, and vice versa.

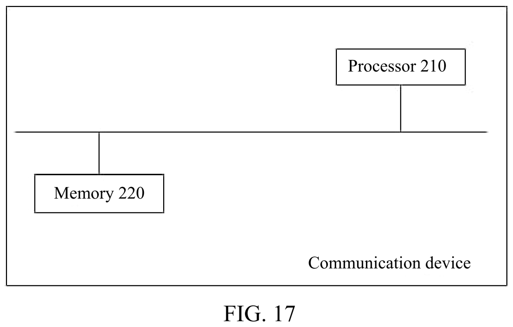

In addition, as shown in FIG. 17, in one embodiment of the present application, a communication device is disclosed, comprising: at least one processor 210; at least one memory 220 for storing at least one program; wherein, when the at least one program is executed by the at least one processor 210, the connection establishment method of any of the preceding embodiments is performed.

In addition, in one embodiment of the present application, a computer-readable storage medium is disclosed, wherein the computer-readable storage medium stores computer-executable instructions, and the computer-executable instructions are used to perform the connection establishment method of any of the preceding embodiments.

In addition, in one embodiment of the present application, a computer program product is disclosed, comprising a computer program or computer instructions, wherein the computer program or the computer instructions are stored in a computer-readable storage medium, and a processor of a computer device reads the computer program or the computer instructions from the computer-readable storage medium, and executes the computer program or the computer instructions, so that the computer device performs the connection establishment method of any of the preceding embodiments.

The system architecture and application scenarios described in the embodiments of the present application are provided to more clearly illustrate the technical solutions of the embodiments of the present application, and do not constitute a limitation to the technical solutions provided by the embodiments of the present application. Those skilled in the art will understand that, with the evolution of system architectures and the emergence of new application scenarios, the technical solutions provided by the embodiments of the present application are also applicable to similar technical problems.

Those skilled in the art can understand that all or some steps of the methods disclosed above, or functional modules/units in the systems or devices, can be implemented in software, firmware, hardware, or an appropriate combination thereof.

In a hardware implementation, the division of functional modules/units mentioned above does not necessarily correspond to the division of physical components; for example, a physical component may have multiple functions, or a function or step may be cooperatively performed by multiple physical components. Some or all physical components may be implemented as software executed by a processor, such as a central processing unit, digital signal processor, or microprocessor, or may be implemented as hardware, or may be implemented as an integrated circuit, such as an application-specific integrated circuit. Such software may be distributed on a computer-readable medium. The computer-readable medium may include computer storage media (or non-transitory media) and communication media (or transitory media). As known to those skilled in the art, the term computer storage media includes volatile and non-volatile, removable and non-removable media implemented by any method or technology for storing information, such as computer-readable instructions, data structures, program modules, or other data. Computer storage media include, but are not limited to, RAM, ROM, EEPROM, flash memory, or other memory technologies, CD-ROM, digital versatile disks (DVD) or other optical disk storage, magnetic cassettes, magnetic tapes, magnetic disk storage, or other magnetic storage devices, or any other medium that can be used to store desired information and can be accessed by a computer. In addition, as known to those skilled in the art, communication media typically include computer-readable instructions, data structures, program modules, or other data in modulated data signals, such as carrier waves or other transmission mechanisms, and may include any information delivery media.

The terms "component," "module," "system," etc., used herein are intended to represent computer-related entities, hardware, firmware, a combination of hardware and software, software, or executing software. For example, a component may include, but is not limited to, a process running on a processor, a processor, an object, an executable, an execution thread, a program, or a computer. Illustrated examples of an application running on a computing device and the computing device itself may be considered components. One or more components may reside within a process or execution thread, and may be located on a single computer or distributed across two or more computers. In addition, these components may execute from various computer-readable media storing various data structures. Components may communicate, for example, via signals having one or more data packets (e.g., data from interaction between two components in a local system, distributed system, or over a network, such as interacting with other systems via the Internet) through local or remote processes.

## Claims

1. A connection establishment method, applied to a controller, the controller being configured with a client context and an administrative context, wherein the client context and the administrative context are configured to share a network call controller component;
the connection establishment method comprising:
receiving, by the network call controller component, a connection establishment request sent by a request initiator, wherein the connection establishment request carries at least a head resource identifier and a tail resource identifier;
sending, by the network call controller component, a connection request to the administrative context according to the connection establishment request;
performing, by the administrative context, connection configuration according to the connection request to obtain connection resource information corresponding to the head resource identifier and the tail resource identifier;
receiving, by the network call controller component, the connection resource information from the administrative context;
sending, by the network call controller component, the connection resource information to the request initiator to complete the connection establishment.

2. The method of claim 1, wherein, the receiving, by the network call controller component, a connection establishment request sent by a request initiator, comprises:
receiving, by the network call controller component shared by the client context, a connection establishment request sent by the request initiator;
the sending, by the network call controller component, a connection request to the administrative context according to the connection establishment request, comprises:
sending, by the network call controller component shared by the client context, a connection request to the network call controller component shared by the administrative context according to the connection establishment request;
the performing, by the administrative context, connection configuration according to the connection request to obtain connection resource information corresponding to the head resource identifier and the tail resource identifier, comprises:
performing the connection configuration according to the connection request by the network call controller component shared by the administrative context, and obtaining the connection resource information corresponding to the head resource identifier and the tail resource identifier;
the receiving, by the network call controller component, the connection resource information from the administrative context, comprises:
receiving, by the network call controller component shared by the client context, the connection resource information from the network call controller component shared by the administrative context;
the sending, by the network call controller component, the connection resource information to the request initiator to complete the connection establishment, comprises:
sending, by the network call controller component shared by the client context, the connection resource information to the request initiator to complete the connection establishment.

3. The method of claim 1 or 2, wherein, the head resource identifier comprises a head boundary resource identifier; the tail resource identifier comprises a tail boundary resource identifier.

4. The method of claim 2, wherein the client context is further configured with a directory service component, and the directory service component is used to convert the resource identifier.

5. The method of claim 4, wherein, the directory service component is further configured in the administrative context, and the administrative context and the customer context share the directory service component; or
the administrative context is configured with a directory service component that is different from the directory service component of the client context.

6. The method of claim 4, wherein, the sending, by the network call controller component shared by the client context, a connection request to the network call controller component shared by the administrative context according to the connection establishment request, comprises:
sending, by the network call controller component shared by the client context, the head resource identifier and the tail resource identifier to the directory service component for resource identifier conversion according to the connection establishment request, to obtain a head subnetwork point resource identifier and a tail subnetwork point resource identifier returned by the directory service component;
generating, by the network call controller component shared by the client context, the connection request according to the head subnetwork point resource identifier and the tail subnetwork point resource identifier;
sending, by the network call controller component shared by the client context, the connection request to the network call controller component shared by the administrative context.

7. The method of claim 2, wherein, the client context is further configured with a connection controller component, a routing controller component and a link resources manager component, the connection controller component being used to request the routing controller component to query a connection route and to request the link resources manager component to select a connection link, the routing controller component being used to calculate the connection route, and the link resources manager component being used to select the connection link among links traversed by the route.

8. The method of claim 7, wherein, the sending, by the network call controller component shared by the client context, a connection request to the network call controller component shared by the administrative context according to the connection establishment request, comprises:
obtaining, by the network call controller component shared by the client context, a head subnetwork point resource identifier and a tail subnetwork point resource identifier of the client context according to the head resource identifier and the tail resource identifier in the connection establishment request, wherein the head subnetwork point resource identifier of the client context corresponds to the head resource identifier, and the tail subnetwork point resource identifier of the client context corresponds to the tail resource identifier;
sending, by the network call controller component shared by the client context, the head subnetwork point resource identifier and the tail subnetwork point resource identifier of the client context to the routing controller component through the connection controller component;
requesting, by the routing controller component, the link resources manager component to obtain a first routing topology and first local connection state information corresponding to the head subnetwork point resource identifier and the tail subnetwork point resource identifier of the client context;
performing, by the routing controller component, route path calculation on the first routing topology and the first local connection state information to obtain first target route information, wherein the first target route information comprises the head subnetwork point resource identifier and the tail subnetwork point resource identifier of the client context;
receiving, by the network call controller component shared by the client context, the first target route information from the routing controller component through the connection controller component;
generating, by the network call controller component shared by the client context, a connection request according to the first target route information;
sending, by the network call controller component shared by the client context, the connection request to the network call controller component shared by the administrative context.

9. The method of claim 7, wherein, the client context is further configured with a directory service component; the sending, by the network call controller component shared by the client context, a connection request to the network call controller component shared by the administrative context according to the connection establishment request, comprises:
obtaining, by the network call controller component shared by the client context, a head subnetwork point resource identifier and a tail subnetwork point resource identifier of the client context according to the head resource identifier and the tail resource identifier in the connection establishment request, wherein the head subnetwork point resource identifier of the client context corresponds to the head resource identifier, and the tail subnetwork point resource identifier of the client context corresponds to the tail resource identifier;
sending, by the network call controller component shared by the client context, the head subnetwork point resource identifier and the tail subnetwork point resource identifier of the client context to the routing controller component through the connection controller component;
requesting, by the routing controller component, the link resources manager component to obtain a second routing topology and second local connection state information corresponding to the head subnetwork point resource identifier and the tail subnetwork point resource identifier of the client context;
performing, by the routing controller component, route path calculation on the second routing topology and the second local connection state information to obtain second target route information, wherein the second target route information comprises the head subnetwork point resource identifier and the tail subnetwork point resource identifier of the client context;
receiving, by the network call controller component shared by the client context, the second target route information from the routing controller component through the connection controller component;
sending, by the network call controller component shared by the client context, the second target route information to the directory service component for resource identifier conversion with respect to the head subnetwork point resource identifier and the tail subnetwork point resource identifier of the client context, so as to obtain third target route information returned by the directory service component, the third target route information comprising a head subnetwork point resource identifier and a tail subnetwork point resource identifier of the administrative context;
generating, by the network call controller component shared by the client context, a connection request according to the third target route information;
sending, by the network call controller component shared by the client context, the connection request to the network call controller component shared by the administrative context.

10. The method of claim 2, wherein, the client context is further configured with a directory service component; the connection resource information comprises a head subnetwork point resource identifier and a tail subnetwork point resource identifier of the administrative context;
the receiving, by the network call controller component shared by the client context, the connection resource information from the network call controller component shared by the administrative context, comprises:
receiving, by the network call controller component shared by the client context, the connection resource information comprising the head subnetwork point resource identifier and the tail subnetwork point resource identifier of the administrative context from the network call controller component shared by the administrative context;
sending, by the network call controller component shared by the client context, the connection resource information to the directory service component for resource identifier conversion with respect to the head subnetwork point resource identifier and the tail subnetwork point resource identifier of the administrative context, so as to obtain connection resource information comprising a head subnetwork point resource identifier and a tail subnetwork point resource identifier of the client context;
receiving, by the network call controller component shared by the client context, the connection resource information comprising the head subnetwork point resource identifier and the tail subnetwork point resource identifier of the client context from the directory service component.

11. The method of claim 10, wherein, the client context is further configured with a connection controller component;
the sending, by the network call controller component shared by the client context, the connection resource information to the request initiator, comprises:
sending, by the network call controller component shared by the client context, the connection resource information comprising a head subnetwork point resource identifier and a tail subnetwork point resource identifier of the client context to the connection controller component for information confirmation;
in response to the connection controller component successfully confirming the connection resource information comprising the head subnetwork point resource identifier and the tail subnetwork point resource identifier of the client context, sending, by the connection controller component, the connection resource information comprising the head subnetwork point resource identifier and the tail subnetwork point resource identifier of the client context to the request initiator through the network call controller component shared by the client context.

12. The method of claim 2, wherein, the client context is further configured with a connection controller component; the connection resource information comprises a head subnetwork point resource identifier and a tail subnetwork point resource identifier of the administrative context;
the sending, by the network call controller component shared by the client context, the connection resource information to the request initiator, comprises:
sending, by the network call controller component shared by the client context, the connection resource information comprising the head subnetwork point resource identifier and the tail subnetwork point resource identifier of the administrative context to the connection controller component for information confirmation;
in response to the connection controller component successfully confirming the connection resource information, obtaining, by the network call controller component shared by the client context, a head subnetwork point resource identifier and a tail subnetwork point resource identifier of the client context according to the head subnetwork point resource identifier and the tail subnetwork point resource identifier of the administrative context;
sending, by the network call controller component shared by the client context, the connection resource information comprising the head subnetwork point resource identifier and the tail subnetwork point resource identifier of the client context to the request initiator.

13. The method of claim 1 or 2, wherein, the controller and the request initiator are peer controllers of each other.

14. The method of claim 13, wherein, the controller is further configured with a server context, and the connection establishment method further comprises:
in response to no connection resource information meeting the connection requirement of the request initiator is obtained locally, sending, by the server context, a request for obtaining connection resource information to the network call controller component shared by the client context of a next peer controller.

15. A connection establishment method, applied to a controller, the controller being configured with a client context and an administrative context, the client context and the administrative context being respectively configured with a network call controller component, wherein the network call controller component corresponding to the administrative context is different from the network call controller component corresponding to the client context;
the connection establishment method comprising:
receiving, by the network call controller component corresponding to the client context, a connection establishment request sent by a request initiator, wherein the connection establishment request carries at least a head resource identifier and a tail resource identifier;
sending, by the network call controller component corresponding to the client context, a connection request to the network call controller component corresponding to the administrative context according to the connection establishment request;
performing, by the network call controller component corresponding to the administrative context, connection configuration according to the connection request to obtain connection resource information corresponding to the head resource identifier and the tail resource identifier;
receiving, by the network call controller component corresponding to the client context, the connection resource information from the network call controller component corresponding to the administrative context;
sending, by the network call controller component corresponding to the client context, the connection resource information to the request initiator to complete the connection establishment.

16. The method of claim 15, wherein the client context is further configured with a directory service component, and the directory service component is used to convert the resource identifier.

17. The method of claim 15, wherein, the client context is further configured with a connection controller component, a routing controller component and a link resources manager component, the connection controller component being used to request the routing controller component to query a connection route and to request the link resources manager component to select a connection link, the routing controller component being used to calculate the connection route, and the link resources manager component being used to select the connection link among links traversed by the route.

18. A communication device, comprising:
at least one processor;
at least one memory configured to store at least one program;
wherein the at least one program, when executed by the at least one processor, causes the at least one processor to perform the connection establishment method of any of claims 1 to 17.

19. A computer-readable storage medium storing a program executable by a processor, wherein the program, when executed by a processor, causes the processor to perform the connection establishment method of any of claims 1 to 17.

20. A computer program product, comprising a computer program or computer instructions stored in a computer-readable storage medium, and the computer program or the computer instructions, when executed by a processor of a communication device, causes the processor of the communication device to perform the connection establishment method of any of claims 1 to 17.
